# EUROPEAN PATENT SPECIFICATION

(11) **EP 3 156 273 B1**
(45) Date of publication and mention of the grant of the patent: **12.06.2019**
(21) Application number: 15809512.5
(22) Date of filing: 15.06.2015
(51) Int. Cl.: B60J 11/04

(54) **FRAMEWORK FOR CAR SUNSHADE AND CAR SUNSHADE**
RAHMEN FÜR EINE FAHRZEUGSONNENBLENDE UND FAHRZEUGSONNENBLENDE
CADRE POUR PARE-SOLEIL DE VOITURE ET PARE-SOLEIL DE VOITURE

(30) Priority: 16.06.2014 CN 201410267147
(43) Date of publication of application: 19.04.2017
(73) Proprietor: Wu, Meizhong, Yiwu, Zhejiang 322000 (CN)
(72) Inventor: Wu, Meizhong, Yiwu, Zhejiang 322000 (CN)
(74) Representative: Stuttard, Garry Philip
(86) International application number: PCT/CN2015/081446
(87) International publication number: WO 2015/192749

(56) References cited:
- AU-A1- 2010 310 322
- CN-A- 101 670 181
- CN-A- 104 044 440
- CN-U- 201 914 061
- CN-U- 203 600 967
- CN-U- 203 600 968
- CN-U- 203 888 603
- DE-A1- 3 827 768
- DE-U1- 29 706 012
- US-A1- 2009 038 766
- US-B2- 7 150 306

## Description

### Technical field

The present invention relates to a car sunshading device, and particularly relates to a car sunshade framework and car sunshade.

### Prior art

As the rate of car use increases, when parking under the hot sun, the metal panel of the car body may quickly accumulate heat, causing the temperature in the interior of the car to soar, and requiring the consumption of a large amount of energy to reduce the temperature after the car is driven. As a consequence, the use of car sunshades has become widely prevalent, and various types of sunshades have emerged to meet this need.

However, most early car sunshades required manual operation for opening and closing, which made use relatively inconvenient. Accordingly, the present applicant has designed a patent termed: "a car sunshade framework" (China patent number: 201010206352.4), which includes a base frame, where the top of the base frame is provided with a pair of transmission shafts disposed in parallel fashion in the front and rear, and the transmission shafts are provided with transmission shaft support elements; Both ends of each transmission shaft are provided with a shaft gear as a sleeve, where the shaft gears and transmission shaft support elements are attached, and each transmission shaft can revolve around the transmission shaft support elements and shaft gears; One gear connection element is attached to each end of each transmission shaft, and each gear connection element is provided with inserted lateral turning shafts that can rotate around the gear connection element. The lateral turning shafts pass through each gear connection element and connect with a revolving gear, where the revolving gear and shaft gear are meshing, and the lateral turning shafts are further provided with lateral turning rods; The top of the base frame is provided with a pair of driven shafts, and each driven shaft is provided with a side stop support rod. It is connected with an externally connected motor via front and rear transmission shafts, and rotates driven by the motor. As the transmission shaft rotates, it also causes the gear connection elements to turn in an outward direction; The lateral turning shafts rotate along with the gear connection elements, and open out toward the front and rear; the lateral turning shafts are connected with revolving gears, and the shaft gears and transmission shaft support elements are fixedly connected to the base frame; when the transmission shaft is in the process of rotation, the shaft gears and transmission shaft support elements are fixed and unmoving. Because the revolving gears and shaft gears are meshing, they rotate when the lateral turning shafts are turning in an outward direction, which causes the lateral turning rods on the lateral turning shafts to extend toward the left and right. The sunshade cloth retracts with the turning of the lateral turning rods and side stop support rods, and does not require manual operation; it easy to control automatically and very convenient to use. Accordingly, this design readily resolves the problem affecting early car sunshades of inconvenient use. However, the fact that the overall structure of this design is relatively complicated will cause its manufacture to be relatively inconvenient and its production cost to be high. Australian Patent No 2010310322 and Chinese Patent No 201520204 disclose an automatic automobile umbrella, comprising a roof mounted umbrella box and umbrella framework and an umbrella framework lifting mechanism. The framework is fixed to a drive mechanism which causes movement of a driving umbrella framework and driven umbrella frameworks. Movement is restricted by pulling needles within the framework, however no further precautions are in place to limit framework movement.

### Disclosure of the invention

The present invention provides a car sunshade framework and car sunshade in which a plurality of ribs turn and extend to form a fan surface and realize sunshading; this resolves the prior art's technical problems of structural complexity, inconvenient production, and high production cost.

The present invention resolves the foregoing technical problems are resolved chiefly employing the following technical solutions: A car sunshade framework, which includes a support frame capable of being placed on a car roof. Four corners at the front, rear, left, and right sides of the support frame, or two corners at the front part of the support frame are provided with projecting positioning posts. Each positioning post is provided several ribs that can rotate around the axial line and fan out to form fan-like surfaces upon rotating toward the outer edge of the support frame. The ribs are arranged on the positioning posts. When sunshade cloth is arranged on the ribs, the ribs rotate about the center lines of the axial lines of the positioning posts, and fan out in a fan-like formation upon rotating toward the outer edge of the left and right sides of the support frame. Sunshading is realized by the formation of fan-like areas projecting outward from the support frame. The overall structure is consequently very simple, manufacturing is convenient, and production cost is low.

According to the invention, the upper and lower layers of the foregoing ribs are arranged in an overlapping fashion, where the upper and lower ribs can rotate relative to each other to form an included angle, and the spaces between ribs are provided with a linkage mechanism used to drive the rotation of adjacent ribs. The linkage mechanism provided between the upper and lower ribs causes the ribs to effectively achieve extension and retraction, and it is only necessary to provide an overall source of motive power to effect the rotation of the uppermost ribs. Retraction is convenient, and is readily subject to automatic operation. The linkage mechanism may consist of small sections of cord or cloth strips, and may also be realized by providing pieces of cloth in the space made by the included angle after this included angle has been formed by the upper and lower ribs.

According to the invention, the foregoing ribs are formed by rotating elements and support rods, where the foregoing linkage mechanism consists of pairs of connecting posts and connecting slots respectively disposed on the mating surfaces of adjacent rotating elements, the tops of the connecting posts extend into the connecting slots and can rotate within the connecting slots with the rotation of the rotating elements, and both ends of the connecting slots are provided with separating surfaces preventing the connecting posts from continuing to rotate in the connecting slots. The connecting posts and connecting slots are employed as a linkage mechanism, and the tops of the connecting posts extending into the connecting slots will rotate in the connecting slots with the rotation of the rotating elements. When extending, after the connecting posts within the connecting slots have rotated outward a certain angle, the separating surfaces of the outer ends of the connecting posts and connecting slots will be in contact, causing the upper and lower ribs to individually, jointly extend in rotating fashion, which enables the ribs to extend in a smooth and stable manner. Furthermore, when the ribs retract, after the connecting posts have rotated inward in the connecting slots a certain angle, the separating surfaces of the inner ends of the connecting posts and connecting slots will be in contact, causing the upper and lower ribs to individually, jointly retract in rotating fashion, enabling the ribs to retract quickly and effectively.

According to the invention, the foregoing ribs include fixed ribs that are fixed relative to the support frame, two or more driven ribs located above the fixed ribs and set over the positioning posts in so that they are able to rotate, and driving ribs located above the driven ribs. The ribs consist of fixed ribs, driven ribs, and driving ribs, where the driving ribs rotate driven by an externally connected power source, and cause the driven ribs to rotate. Furthermore, since the fixed ribs are disposed so as to be fixed and unmoving relative to the support frame, the fixed ribs will not rotate with the rotation of the driven ribs above them, which causes the spaces between the ribs to form a stable fan-shaped sunshade surface after extension of the ribs. Furthermore, when retracting, the ribs can fully retract above the fixed ribs after the ribs have rotated in an inward direction. Retraction effectiveness will be good, it is only necessary to effect the rotation of the driving ribs to realize the extension of all the ribs, and the sunshade can readily be automatically operated.

Preferably, the positioning posts and support frame are conjoined, and the foregoing driving ribs are placed over the positioning posts so that they can rotate. When the positioning posts and support frame are fixed, the driving ribs can be freely placed on the positioning posts and thereby allow rotation about the positioning posts, achieving structural simplicity and convenient assembly.

Preferably, the positioning posts are disposed on the support frame so that they can rotate, and the foregoing driving ribs and positioning posts are conjoined. Of course, as an equivalent scheme, positioning posts can be disposed on the support frame so that they can rotate, and the driving ribs fixed on the positioning posts in order to realize rotation.

Preferably, the separating surfaces on the inner sides of the foregoing connecting posts and connecting slots are mutually corresponding. The front, upper sides of the separating surfaces on the inner sides of the connecting posts where they are situated in the connecting slots form a mutual correspondence with the separating surfaces, and the retracted volume will be small since the ribs can retract fully during retraction.

Preferably, the foregoing fixed ribs face toward the interior of the support frame or are disposed parallel to the right and left edges of the support frame, and the fan-like surface formed by the foregoing ribs when extended can have a maximum angle of 270°-360°. Because the foregoing fixed ribs face toward the interior of the support frame or are disposed parallel to the right and left edges of the support frame, the fixed ribs are located entirely within the support frame. When the ribs are extended, the inner side of the fan-like surface formed by the extension of the ribs is located within the support frame. The fan-like surface is thus able to form a better cover over both edges of the support frame, and provides better sunshading effectiveness. When the ribs retract, the ribs sequentially rotate and are retracted to above the fixed ribs; after retraction, the ribs are located within the support frame, and the volume is consequently small after retraction. The specific angular extent of the fan-like surface formed by the extension of the ribs can be determined by the included angle between the fixed ribs and the right and left edges of the support frame. When the fixed ribs are parallel to the right and left edges of the support frame, the fan-like surface formed by the full extension of the ribs will be set as 270°. When the included angle between the fixed ribs and the right and left edges of the support frame is 90°, the fan-like surface formed by the full extension of the ribs will be set as 360°. Accordingly, the maximum angle of 270°-360° of the fan-like surface formed by the extension of the ribs realizes full coverage to outside the edges and corners of the support frame when the ribs are extended, enabling excellent sunshading results.

Preferably, the difference between one-half of the distance between the left and right positioning posts on the foregoing support frame and the length of the ribs is 0-15 mm. During the process of extending the ribs, when the ribs on the right and left sides rotate until they are parallel with the front and rear edges of the support frame, a gap remains between the two facing ribs. Accordingly, there will be no collisions when the right and left ribs are extended, which will facilitate complete extension of the ribs. Furthermore, the length of this gap is set as less than than 30 mm, causing the gap created in the center of the front and rear sunshading areas to be small, and ensuring good sunshading effectiveness.

Preferably, the foregoing connecting slots are in a circular arc with the positioning posts at their center. The connecting slots are arranged in a circular arc the positioning posts at their center, and the shape of the connecting slots can mutually accommodate the path of motion of the connecting posts. Accordingly, the connecting posts and connecting slots will have a good fit, enabling smooth rotation.

According to the invention, the foregoing support frame is provided with fixed, projecting limit posts serving to prevent the rotation of the driving ribs, and the limit posts are located on the inner side of the fixed ribs. When the driving ribs rotate and extend outward to the right and left from the interior of the support frame, they will rotate past the front and rear edges of the support frame to the interior of the support frame. The limit posts are disposed above the support frame and on the inner side of the fixed ribs; this ensures a good ability to limit and fix the driving ribs, and facilitates structural stability.

Preferably, the foregoing support rods and support frame have a parallel arrangement, facilitating the extension and retraction of the support rods.

A car sunshade, which includes sunshade cloth and a framework, where the framework is the car sunshade framework in any of the foregoing paragraphs. Because the foregoing framework has the aforementioned technical effects, a car sunshade with such a framework will have identical technical effects.

Preferably, the foregoing sunshade cloth consists of 4 pieces on the front, rear, right, and left, where the 4 pieces of sunshade cloth are fixed by the ribs disposed within the front, rear, right, and left quadrants of the support frame.

Preferably, the foregoing sunshade cloth consists of 2 pieces on the right and left, where the 2 pieces of sunshade cloth are fixed by the ribs disposed within the right and left sides of the support frame.

### Beneficial effects of the invention

### Beneficial effects

The present invention has the following characteristics in comparison with the prior art: The ribs are arranged on the positioning posts. When sunshade cloth is arranged on the ribs, the ribs rotate about the center lines of the axial lines of the positioning posts, and fan out in a fan-like formation upon rotating toward the outer edge of the left and right sides of the support frame. Sunshading is realized by the formation of fan-like areas projecting outward from the support frame. The overall structure is consequently very simple, manufacturing is convenient, and production cost is low. 2. The linkage mechanism provided between the upper and lower ribs causes the ribs to effectively achieve extension and retraction, and it is only necessary to provide an overall source of motive power to effect the rotation of the uppermost ribs. Retraction is convenient, and is readily subject to automatic operation. 3. the front, upper sides of the separating surfaces on the inner sides of the connecting posts where they are situated in the connecting slots form a mutual correspondence with the separating surfaces, and the retracted volume will be small since the ribs can retract fully during retraction.

### Summary explanation of the attached figures

### Explanation of attached figures

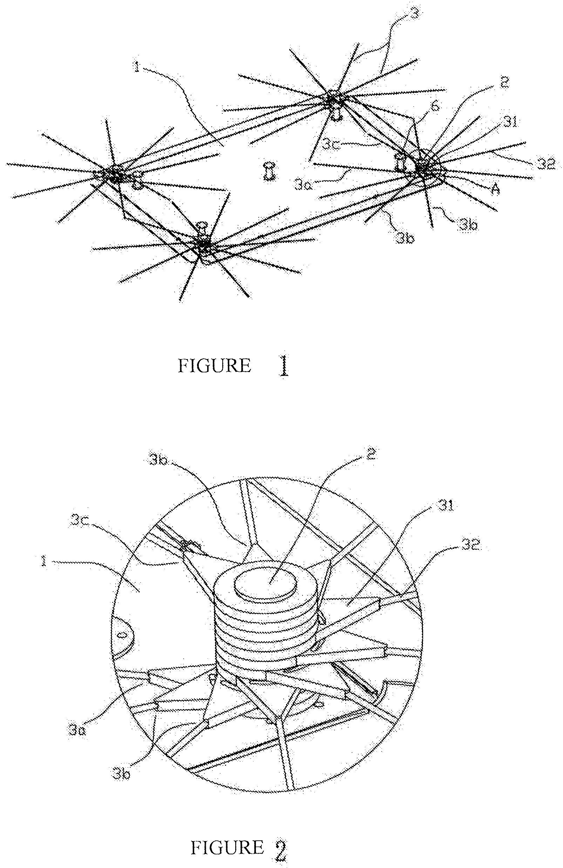

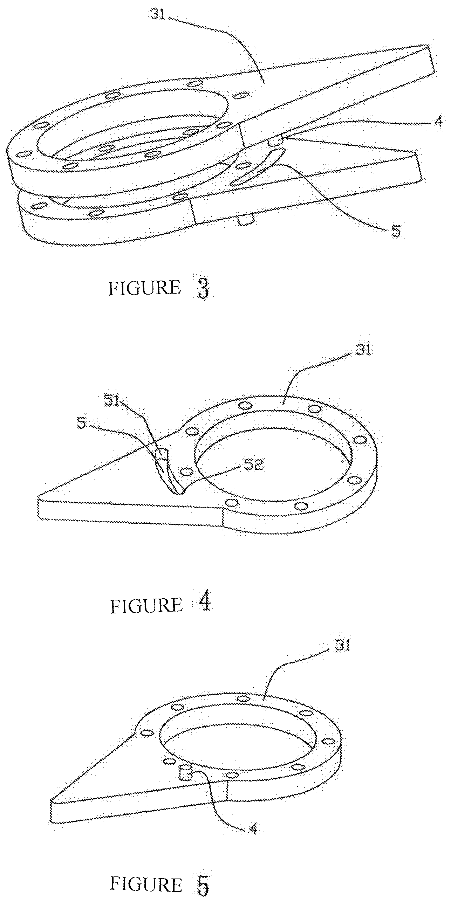

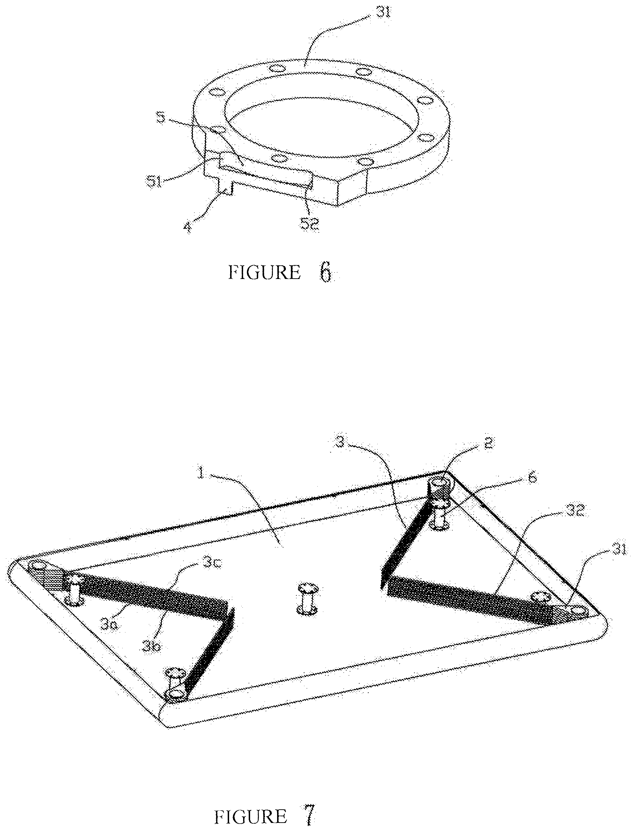

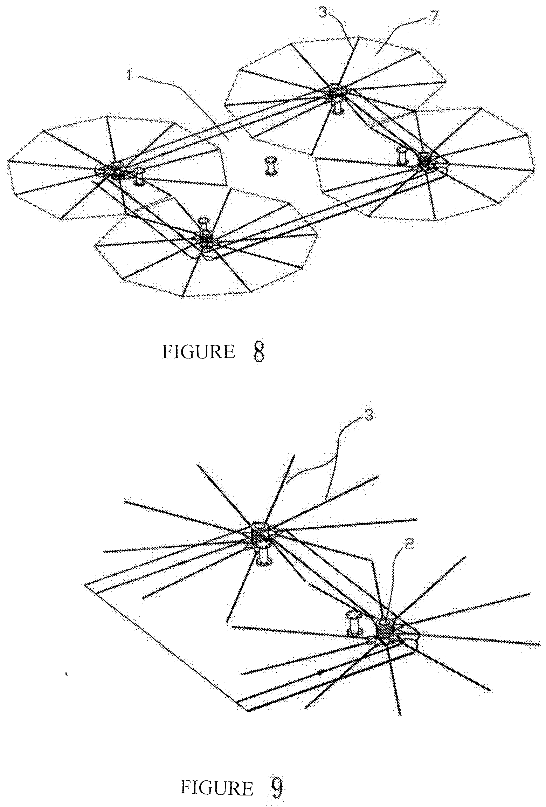

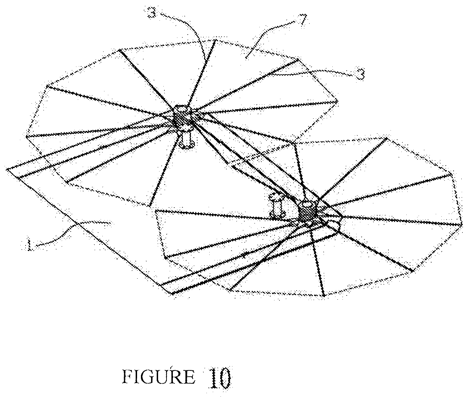

Attached figure 1 is a structural schematic diagram of embodiment 1 of the present invention showing the car sunshade framework when extended.
Attached figure 2 is an enlarged view of part A of attached figure 1.
Attached figure 3 is a structural schematic diagram showing the mutual configuration of the rotating elements in embodiment 1 of the present invention.
Attached figure 4 is a structural schematic diagram showing a rotating elements in embodiment 1 of the present invention.
Attached figure 5 is a structural schematic diagram showing a rotating element in embodiment 1 of the present invention from another angle.
Attached figure 6 is a structural schematic diagram of a rotating elements in embodiment 1 showing the center line following the connecting post and the front cut-out portion of the connecting slot;
Attached figure 7 is a structural schematic diagram of the car sunshade framework in embodiment 1 of the present invention when in a retracted position.
Attached figure 8 is a structural schematic diagram of the car sunshade in embodiment 1 of the present invention.
Attached figure 9 is a structural schematic diagram of the car sunshade framework in embodiment 1 of the present invention when in a retracted position.
Attached figure 10 is a structural schematic diagram of the car sunshade in embodiment 2 of the present invention.

### Embodiments of the invention

### Embodiment of the present invention

The following is a specific explanation of the present invention's technical solutions employing embodiments and referring to the attached figures.

Embodiment 1: See figures 1 and 2; a car sunshade framework, which includes a support frame capable of being placed on a car roof 1, where support frame 1 is rectangular and can be mounted on the roof of an ordinary sedan. The four corners at the front, rear, left, and right sides of support frame 1 are provided with projecting positioning posts 2, and positioning posts 2 are arranged in a rectangle. Positioning posts 2 are 5 mm distant from the edge of support frame 1, and each positioning post 2 is provided several ribs 3 that can rotate around the axial line and fan out to form fan-like surfaces upon rotating toward the outer edge of the support frame 1. Ten ribs 3 are provided in the figure. Of course, the actual number of ribs is not restricted to ten, as long as they can extend to form a fan-like surface. The ribs are arranged on the positioning posts. When sunshade cloth is arranged on the ribs, the ribs rotate about the center lines of the axial lines of the positioning posts, and fan out in a fan-like formation upon rotating toward the outer edge of the left and right sides of the support frame. Sunshading of the two sides, front, and back of the car is realized by the formation of fan-like areas projecting outward from the support frame. The overall structure is consequently very simple, manufacturing is convenient, and production cost is low.

See figures 1, 2, and 3; the upper and lower layers of the ribs 3 are arranged in an overlapping fashion, where the upper and lower ribs 3 can rotate relative to each other to form an included angle, and the spaces between ribs are provided with a linkage mechanism used to drive the rotation of adjacent ribs 3. The linkage mechanism provided between the upper and lower ribs causes the ribs to effectively achieve extension and retraction, and it is only necessary to provide an overall source of motive power to effect the rotation of the uppermost ribs. Retraction is convenient, and is readily subject to automatic operation. The linkage mechanism may consist of small sections of cord or cloth strips, and may also be realized by providing pieces of cloth in the space made by the included angle after this included angle has been formed by the upper and lower ribs.

See figures 1, 3, and 6; the ribs 3 are formed by rotating elements 31 and support rods 32, where the foregoing linkage mechanism consists of pairs of connecting posts 4 and connecting slots 5 respectively disposed on the mating surfaces of adjacent rotating elements 31, the tops of the connecting posts 4 extend into the connecting slots 5 and can rotate within the connecting slots 5 with the rotation of the rotating elements 31, and both ends of the connecting slots 5 are provided with separating surfaces 51 and 52 preventing the connecting posts 4 from continuing to rotate in the connecting slots 5. The connecting posts and connecting slots are employed as a linkage mechanism, and the tops of the connecting posts extending into the connecting slots will rotate in the connecting slots with the rotation of the rotating elements. When extending, after the connecting posts within the connecting slots have rotated outward a certain angle, the separating surfaces of the outer ends of the connecting posts and connecting slots will be in contact, causing the upper and lower ribs to individually, jointly extend in rotating fashion, which enables the ribs to extend in a smooth and stable manner. Furthermore, when the ribs retract, after the connecting posts have rotated inward in the connecting slots a certain angle, the separating surfaces of the inner ends of the connecting posts and connecting slots will be in contact, causing the upper and lower ribs to individually, jointly retract in rotating fashion, enabling the ribs to retract quickly and effectively.

See figures 1, 2, and 7; the ribs 3 include fixed ribs 3a that are fixed relative to the support frame 1, two or more driven ribs 3b located above the fixed ribs 3a and set over the positioning posts 2 in so that they are able to rotate, and driving ribs 3c located above the driven ribs 3b. The ribs consist of fixed ribs, driven ribs, and driving ribs, where the driving ribs rotate driven by an externally connected power source, and cause the driven ribs to rotate. Furthermore, since the fixed ribs are disposed so as to be fixed and unmoving relative to the support frame, the fixed ribs will not rotate with the rotation of the driven ribs above them, which causes the spaces between the ribs to form a stable fan-shaped sunshade surface after extension of the ribs. Furthermore, when retracting, the ribs can fully retract above the fixed ribs after the ribs have rotated in an inward direction. Retraction effectiveness will be good, it is only necessary to effect the rotation of the driving ribs to realize the extension of all the ribs, and the sunshade can readily be automatically operated.

See figures 1, 2, and 7; the positioning posts 2 and support frame 1 are conjoined, and driving ribs 3c is placed on positioning post 2 so that it can rotate. When the positioning posts and support frame are fixed, the driving ribs can be freely placed on the positioning posts and thereby allow rotation about the positioning posts, achieving structural simplicity and convenient assembly. Of course, as an equivalent scheme, positioning posts 2 can be disposed on support frame 1 so that they can rotate, and driving ribs 3c and positioning posts 2 can be conjoined to realize rotation.

See figure 6; the separating surfaces of connecting post 4 and connecting slot 51 are mutually corresponding. Connecting post 4 is located to the front and above separating surface 51 in the connecting slot, allowing it to mate with separating surface 51. The side wall of connecting post 4 on the same side as separating surface 51 corresponds with separating surface 51 in the upward and downward directions. The retracted volume will be small since the ribs can retract fully during retraction.

See figures 1 and 7; fixed ribs 3a face toward the interior of support frame 1, the included angle between fixed ribs 3a and the left and right edges of support frame 1 is 40°, the included angle between adjacent ribs 3 when extended is 35°, and the maximum angle of the fan-like surface formed by ribs 3 when extended is 315°. Accordingly, when driving ribs 3c rotate past the front and rear edges of support frame 1, they will rotate into the interior of support frame 1, and ribs 3 therefore completely cover the sides and corners of the support frame when extended, providing effective sunshading. Of course, fixed ribs 3a can be arranged parallel to the left and right edges of support frame 1. At that time, as long as the maximum angle of the fan-like surface formed by ribs 3 when extended is 270°, the fan-like surface can realize complete covering of the sides and corners of the support frame.

See figure 1; the difference between one-half the distance between right and left positioning posts 2 on support frame 1 and the length of ribs 3 is 3 mm. During the process of extending the ribs, when the ribs on the right and left sides rotate until they are parallel with the front and rear edges of the support frame, a gap remains between the two facing ribs. Accordingly, there will be no collisions when the right and left ribs are extended, which will facilitate complete extension of the ribs. Furthermore, the length of this gap is set as less than 30 mm, causing the gap created in the center of the front and rear sunshading areas to be small, and ensuring good sunshading effectiveness. By the same principle, the difference between one-half of the distance between the front and rear positioning posts 2 on support frame 1 and the length of the ribs 3 is 0-15 mm.

See figure 4; connecting slots 5 are arranged in a circular arc with positioning post 2 at their center. The connecting slots are arranged in a circular arc the positioning posts at their center, and the shape of the connecting slots can mutually accommodate the path of motion of the connecting posts. Accordingly, the connecting posts and connecting slots will have a good fit, enabling smooth rotation.

See figures 1 and 7; support frame 1 is provided with fixed, projecting limit posts 6 serving to prevent the rotation of the driving ribs 3c, and the limit posts 6 are located on the inner side of the fixed ribs 3. When the driving ribs rotate and extend outward to the right and left from the interior of the support frame, they will rotate past the front and rear edges of the support frame to the interior of the support frame. The limit posts are disposed above the support frame and on the inner side of the fixed ribs; this ensures a good ability to limit and fix the driving ribs, and facilitates structural stability. See figures 1 and 7; support rods 32 are in a parallel arrangement with support frame 1, facilitating the extension and retraction of the support rods.

Figure 8 is a structural schematic diagram of an extended car sunshade comprising the car sunshade framework in this embodiment with sunshade cloth mounted on it. As shown in Fig. 8, sunshade cloth 7 consists of 4 pieces on the front, rear, right, and left; the 4 pieces of sunshade cloth 7 are respectively fixed by the ribs 3 disposed on the front, rear, right, and left portions of support frame 1, and form a fan-like surface when ribs 3 are fully extended. Sunshade cloth 7 covers the fan-like surface to form a fan-like sunshading surface, which possesses good sunshading effectiveness. When sunshade cloth 7 is fixed on the ribs, the ribs rotate about the center lines of the axial lines of the positioning posts, and fan out in a fan-like formation upon rotating toward the outer edge of the left and right sides of the support frame. Sunshading is realized by the formation of fan-like areas projecting outward from the support frame. The overall structure is consequently very simple, manufacturing is convenient, production cost is low, extension and retraction are convenient, and the sunshade is easy to operate automatically.

Embodiment 2: See Fig. 9; in the car sunshade framework, which includes a support frame capable of being placed on a car roof 1, support frame 1 is rectangular and can be mounted on the roof of an ordinary pickup or small van. The two front corners of support frame 1 are provided with projecting positioning posts 2, and positioning posts 2 are provided with several ribs 3 that can rotate around the axial line and fan out to form fan-like surfaces upon rotating toward the outer edge of the support frame 1; other aspects are identical with those in embodiment 1.

See Fig. 10, which shows a structural schematic diagram of an extended car sunshade comprising the car sunshade framework in this embodiment with sunshade cloth mounted on it. As shown in Fig. 8, sunshade cloth 7 consists of 2 pieces on the left and right; the 2 pieces of sunshade cloth 7 are respectively fixed by the ribs 3 disposed on the left and right portions of support frame 1, and form a fan-like surface when ribs 3 are fully extended. Sunshade cloth 7 covers the fan-like surface to form a fan-like sunshading surface, which possesses good sunshading effectiveness.

## Claims

1. A car sunshade framework which includes:
a support frame (1) capable of being placed on a car roof, wherein four corners at the front, rear, left and right sides of the support frame (1), or two corners at the front part of the support frame (1) are provided with projecting positioning posts (2), each positioning post (2) is provided with several ribs (3a, 3b, 3c) that can rotate around the axial line and fan out to form fan-like surfaces upon rotating towards the outer edge of the support frame (1), wherein the several ribs include fixed ribs (3a) that are fixed relative to the support frame (1), two or more driven ribs (3b) located above the fixed ribs (3a) and set over the positioning posts (2) so that they are able to rotate and driving ribs (3c) located above the driven ribs (3b), wherein the upper and lower layers of the several ribs (3a, 3b, 3c) are arranged in an overlapping fashion, where the upper and lower ribs (3a, 3b, 3c) can rotate relative to each other to form an included angle and the spaces between ribs are provided with a linkage mechanism used to drive the rotation of adjacent ribs, wherein the several ribs (3a, 3b, 3c) are formed by rotating elements (31) and support rods (32), wherein the linkage mechanism consists of pairs of connecting posts (4) and connecting slots (5) respectively disposed on the mating surfaces of adjacent rotating elements (31), wherein the tops of the connecting posts (4) extend into the connecting slots (5) and can rotate within the connecting slots (5) with the rotation of the rotating elements (31) and both ends of the connecting slots (5) are provided with separating surfaces (51) preventing the connecting posts (4) from continuing to rotate in the connecting slots (5),
**characterized in that** the car sunshade framework further comprises fixed projecting limit posts (6) on the support frame (1), serving to prevent the rotation of the driving ribs (3c), wherein the limit posts (6) are located on the inner side of the fixed ribs (3a).

2. The car sunshade framework of Claim 1 wherein the positioning posts (2) and support frame (1) are conjoined and the driving ribs (3c) are placed over the positioning posts (2) so that they can rotate.

3. The car sunshade framework of Claim 1 wherein the positioning posts (2) are disposed on the support frame (1) so that they can rotate and the driving ribs (3c) and positioning posts (2) are conjoined.

4. The car sunshade framework of Claim 1 wherein the separating surfaces on the connecting posts (4) and connecting slots (5) are mutually corresponding.

5. The car sunshade framework in Claim 1 wherein the fixed ribs (3a) face towards the interior of the support frame (1) or are disposed parallel to the right and left edges of the support frame (1), wherein the fan-like surface formed by the driving ribs (3c), the driven ribs (3b) and the fixed ribs (3a) when extended can have a maximum angle of 270°-360°.

6. The car sunshade framework of Claim 5 wherein the difference between one-half of the distance between the left and right positioning posts (2) on the support frame (1) and the length of the driving ribs (3c) or the driven ribs (3b) is 0-15 mm.

7. The car sunshade framework of Claim 1 or 4 wherein the connecting slots (5) are in a circular arc with the positioning posts (2) at their center.

8. The car sunshade framework of Claim 1 wherein the support rods (32) and support frame (1) have a parallel arrangement.

9. A car sunshade including a sunshade cloth (7) and a framework, wherein the framework consists of the car sunshade framework of any of claims 1 through 8.

10. The car sunshade framework of Claim 9 wherein the sunshade cloth (7) consists of four pieces on the front, rear, right and left, wherein the four pieces of sunshade cloth (7) are fixed by the ribs (3a, 3b, 3c) disposed within the front, rear, right and left quadrants of the support frame (1).

11. The car sunshade framework of Claim 9 wherein the sunshade cloth (7) consists of two pieces on the right and left, wherein the two pieces of sunshade cloth (7) are fixed by the ribs (3a, 3b, 3c) disposed within the right and left sides of the support frame (1).

## Patentansprüche

1. Fahrzeugsonnenblendenrahmen, welcher aufweist:
einen Halterahmen (1), welcher in der Lage ist, auf einem Fahrzeugdach angeordnet zu werden, wobei vier Ecken an der vorderen, hinteren, linken und rechten Seite des Halterahmens (1) oder zwei Ecken an dem vorderen Teil des Halterahmens (1) mit hervorragenden Einstellungsstäben (2) versehen sind, wobei jeder Einstellungsstab (2) mit mehreren Rippen (3a, 3b, 3c) versehen ist, welche sich um die axiale Linie herum drehen und sich auffächern können, um fächerähnliche Flächen beim Drehen zu dem Außenrand des Halterahmen (1) auszubilden, wobei die mehreren Rippen aufweisen befestigte Rippen (3a), welche relativ zu dem Halterahmen (1) befestigt sind, zwei oder mehr angetriebene Rippen (3b), welche oberhalb der befestigten Rippen (3a) angeordnet sind und über den Einstellungsstäben (2) montiert sind, so dass sie sich drehen können, und antreibende Rippen (3c) welche oberhalb der angetriebenen Rippen (3b) angeordnet sind, wobei die oberen und unteren Schichten der mehreren Rippen (3a, 3b, 3c) in einer überlappenden Weise angeordnet sind, wobei sich die oberen und unteren Rippen (3a, 3b, 3c) relativ zueinander drehen können, um einen eingeschlossenen Winkel auszubilden, und wobei die Zwischenräume zwischen Rippen mit einem Verbindungsmechanismus versehen sind, welcher eingesetzt wird, um die Drehung benachbarter Rippen anzutreiben, wobei die mehreren Rippen (3a, 3b, 3c) durch Drehelemente (31) und Haltestangen (32) ausgebildet sind, wobei der Verbindungsmechanismus aus einem Paar von Verbindungsstäben (4) und zugehörigen Verbindungsschlitzen (5) besteht, welche auf zusammengehörigen Flächen von benachbarten Drehelementen (31) angeordnet sind, wobei sich die Oberseiten der Verbindungsstäbe (4) in die Verbindungsschlitze (5) erstrecken und sich in den Verbindungsschlitzen (5) mit der Drehung der Drehelemente (31) drehen können und wobei beide Enden der Verbindungsschlitze (5) mit trennenden Flächen (51) versehen sind, welche verhindern, dass sich die Verbindungsstäbe (4) weiter in den Verbindungsschlitzen (5) drehen,
**dadurch gekennzeichnet, dass** der Fahrzeugsonnenblendenrahmen darüber hinaus befestigte hervorragende Grenzstäbe (6) auf dem Halterahmen (1) umfasst, welche dazu dienen, die Drehung der antreibenden Rippen (3c) zu verhindern, wobei die Grenzstäbe (6) auf der Innenseite der befestigten Rippen (3a) angeordnet sind.

2. Fahrzeugsonnenblendenrahmen nach Anspruch 1, wobei die Einstellungsstäbe (2) und der Halterahmen (1) vereinigt sind, und die antreibenden Rippen (3c) über den Einstellungsstäben (2) angeordnet sind, so dass sie sich drehen können.

3. Fahrzeugsonnenblendenrahmen nach Anspruch 1, wobei die Einstellungsstäbe (2) auf dem Halterahmen (1) angeordnet sind, so dass sie sich drehen können, und die antreibenden Rippen (3c) und die Einstellungsstäbe (2) vereinigt sind.

4. Fahrzeugsonnenblendenrahmen nach Anspruch 1, wobei die trennenden Flächen auf den Verbindungsstellen (4) und die Verbindungsschlitze (5) aufeinander abgestimmt sind.

5. Fahrzeugsonnenblendenrahmen nach Anspruch 1, wobei die befestigten Rippen (3a) zu dem Inneren des Halterahmens (1) gerichtet sind oder parallel zu dem rechten und linken Rand des Halterahmens (1) angeordnet sind, wobei die fächerähnliche Fläche, welche durch die antreibenden Rippen (3c), die angetriebenen Rippen (3b) und die befestigten Rippen (3a) ausgebildet wird, wenn sie ausgedehnt sind, einen maximalen Winkel von 270°-360° aufweisen kann.

6. Fahrzeugsonnenblendenrahmen nach Anspruch 5, wobei die Differenz zwischen einer Hälfte der Differenz zwischen den linken und rechten Einstellungsstäben (2) auf dem Halterahmen (1) und der Länge der antreibenden Rippen (3c) oder der angetriebenen Rippen (3b) 0-15 mm beträgt.

7. Fahrzeugsonnenblendenrahmen nach Anspruch 1 oder 4, wobei die Verbindungsschlitze (5) in einem Kreisbogen mit den Einstellungsstäben (2) in ihrer Mitte sind.

8. Fahrzeugsonnenblendenrahmen nach Anspruch 1, wobei die Haltestangen (32) und der Halterahmen (1) eine parallele Anordnung aufweisen.

9. Fahrzeugsonnenblende mit einem Sonnenblendenstoff (7) und einem Rahmen, wobei der Rahmen aus dem Fahrzeugsonnenblendenrahmen nach einem der Ansprüche 1 bis 8 besteht.

10. Fahrzeugsonnenblendenrahmen nach Anspruch 9, wobei der Sonnenblendenstoff (7) aus vier Stücken vorn, hinten, rechts und links besteht, wobei die vier Stücke des Sonnenblendenstoffs (7) durch die Rippen (3a, 3b, 3c) befestigt sind, welche in dem vorderen, hinteren, rechten und linken Quadranten des Halterahmens (1) angeordnet sind.

11. Fahrzeugsonnenblendenrahmen nach Anspruch 9, wobei der Sonnenblendenstoff (7) aus zwei Stücken rechts und links besteht, wobei die zwei Stücke des Sonnenblendenstoffs (7) durch die Rippen (3a, 3b, 3c) befestigt sind, welche in der rechten und linken Seite des Halterahmens (1) angeordnet sind.

## Revendications

1. Structure pour pare-soleil de voiture qui comprend :
un châssis de support (1) apte à être placé sur le toit d'une voiture, où quatre angles au niveau des côtés avant, arrière, gauche et droit du châssis de support (1), ou deux angles au niveau de la partie avant du châssis de support (1), sont pourvus de tiges de positionnement en saillie (2), chaque tige de positionnement (2) est dotée de plusieurs nervures (3a, 3b, 3c) qui peuvent tourner autour de la ligne axiale et se déployer pour former des surfaces du type éventail lors de la rotation vers le bord extérieur du châssis de support (1), où la pluralité de nervures comprend des nervures fixes (3a) qui sont fixes par rapport au châssis de support (1), deux ou plus de deux nervures entraînées situées au-dessus des nervures fixes (3a) et placées sur les tiges de positionnement (2) de manière à pouvoir tourner et des nervures d'entraînement (3c) situées au-dessus des nervures entraînées (3b), où les couches supérieures et inférieures de la pluralité de nervures (3a, 3b, 3c) étant agencées en superposition, les nervures supérieures et inférieures (3a, 3b, 3c) pouvant tourner les unes par rapport aux autres pour former un angle inclus et les espaces entre les nervures étant dotés d'un mécanisme de tringlerie utilisé pour entraîner la rotation de nervures adjacentes, où la pluralité de nervures (3a, 3b, 3c) est formée par des éléments rotatifs (31) et des tiges de support (32), où le mécanisme de tringlerie consiste en paires de tiges de connexion (4) et fentes de connexion (5), disposées respectivement sur les surfaces d'accouplement d'éléments rotatifs adjacents (31), où le dessus des tiges de connexion (4) s'étend dans les fentes de connexion (5) et peut tourner au sein des fentes de connexion (5) avec la rotation des éléments rotatifs (31) et les deux extrémités des fentes de connexion (5) sont pourvues de surfaces de séparation (51) empêchant que les tiges de connexion (4) continuent de tourner dans les fentes de connexion (5),
la structure pour pare-soleil de voiture étant **caractérisée en ce qu'**elle comprend, en outre, des tiges de butée fixes en saillie (6) sur le châssis de support (1), servant à empêcher la rotation des nervures d'entraînement (3c), où les tiges de butée (6) sont situées sur le côté intérieur des nervures fixes (3a).

2. Structure pour pare-soleil de voiture selon la revendication 1, dans laquelle les tiges de positionnement (2) et le châssis de support (1) sont combinés et les nervures d'entraînement (3c) sont placées sur les tiges de positionnement (2) de manière à pouvoir tourner.

3. Structure pour pare-soleil de voiture selon la revendication 1, dans laquelle les tiges de positionnement (2) sont disposées sur le châssis de support (1) de manière à pouvoir tourner et les nervures d'entraînement (3c) et les tiges de positionnement (2) sont combinées.

4. Structure pour pare-soleil de voiture selon la revendication 1, dans laquelle les surfaces de séparation sur les tiges de connexion (4) et les fentes de connexion (5) sont en correspondance mutuelle.

5. Structure pour pare-soleil de voiture selon la revendication 1, dans laquelle les nervures fixes (3a) sont tournées vers l'intérieur du châssis de support (1) ou sont disposées parallèlement aux bords gauche et droit du châssis de support (1), où la surface du type éventail formée par les nervures d'entraînement (3c), les nervures entraînées (3b) et les nervures fixes (3a) lorsque déployées peuvent avoir un angle maximal de 270° à 360°.

6. Structure pour pare-soleil de voiture selon la revendication 5, dans laquelle la différence entre une moitié de la distance entre les tiges de positionnement (2) gauche et droite sur le châssis de support (1) et la longueur des nervures d'entraînement (3c) ou des nervures entraînées (3b) est de 0 à 15 mm.

7. Structure pour pare-soleil de voiture selon la revendication 1 ou 4, dans laquelle les fentes de connexion (5) ont la forme d'un arc circulaire avec les tiges de positionnement (2) en leur centre.

8. Structure pour pare-soleil de voiture selon la revendication 1, dans laquelle les tiges de support (32) et le châssis de support (1) sont agencés parallèlement.

9. Pare-soleil de voiture comprenant une étoffe de pare-soleil (7) et un châssis de support, où le châssis de support consiste en le châssis de support de pare-soleil selon l'une quelconque des revendications 1 à 8.

10. Structure pour pare-soleil de voiture selon la revendication 9, dans laquelle l'étoffe de pare-soleil (7) consiste en quatre pièces sur les côtés avant, arrière, droite et gauche, où les quatre pièces d'étoffe de pare-soleil (7) sont fixées par les nervures (3a, 3b, 3c) disposées au sein des quadrants avant, arrière, droit et gauche du châssis de support (1).

11. Structure pour pare-soleil de voiture selon la revendication 9, dans laquelle l'étoffe de pare-soleil (7) consiste en deux pièces sur la droite et la gauche, où les deux pièces d'étoffe de pare-soleil (7) sont fixées par les nervures (3a, 3b, 3c) disposées au sein des côtés droit et gauche du châssis de support (1).
